# EUROPEAN PATENT SPECIFICATION

(11) **EP 0 947 983 B1**
(45) Date of publication and mention of the grant of the patent: **07.05.2008**
(21) Application number: 99302309.2
(22) Date of filing: 25.03.1999
(51) Int. Cl.: G11B 7/085, G11B 7/12, G11B 7/14

(54) **Swing arm driving type optical recording/reproducing apparatus**
Optisches Aufzeichnungs-/Wiedergabegerät mit Schwenkarmantrieb
Dispositif d'enregistrement / de reproduction optique du type à entraînement par bras pivotant

(30) Priority: 30.03.1998 KR 9811070
(43) Date of publication of application: 06.10.1999
(73) Proprietor: SAMSUNG ELECTRONICS CO., LTD., Suwon-City, Kyungki-do (KR)
(72) Inventor: Lee, Yong-hoon, Suwon-city, Kyungki-do (KR); Lee, Chul-woo, Bundang-gu, Sungnam-city, Kyungki-do (KR); Chung, Chong-sam, Sungnam-city, Kyungki-do (KR); Cho, Kun-ho, Kwonsun-gu, Suwon-city, Kungki-do (KR)
(74) Representative: Clark, David James

(56) References cited:
- WO-A-98/06095
- WO-A-98/09392
- US-A- 4 626 679
- US-A- 5 432 763
- US-A- 5 631 893

## Description

The present invention relates in general to the field of optical recording/reproducing apparatus for recording information on and reproducing information from an optical recording medium, and more particularly, to a swing arm driving type optical recording/reproducing apparatus.

In general, an optical recording/reproducing apparatus employs a recording medium such as an optical disk which can have information recorded on one or both sides thereof, or a plurality of optical disks separated from each other and having respective centers of rotation located on the same axis in order to increase the storage capacity thereof. Information is recorded and reproduced using an optical pickup. The known optical recording/reproducing apparatus may be divided into a carrier driving type and a swing arm driving type, depending on the driving type employed.

In the carrier driving type, the optical pickup is installed on a base to be capable of directly transmitting an optical beam. The optical pickup is moved along a radial direction of the optical disk by a predetermined driving means.

In the swing arm driving type, an optical spot formed on the optical disk is transmitted by the optical pickup using the rotation of a swing arm rotatably installed on a base. The swing arm driving type has an advantage over the carrier driving type of reducing the access time by determining the position of the optical spot focused on the optical disk by the rotation of the swing arm centering around one pivot point. Meanwhile, in the swing arm driving type, most optical elements of the optical pickup are fixedly arranged on the base and optical elements such as the objective lens for condensing light on the information recording surface are arranged in the swing arm. Accordingly, the structure and assembly of the optical recording/reproducing apparatus is complicated and the optical path is designed to be long. Therefore, the swing arm driving type has a problem in that optical loss increases.

WO 98/06095, against which claim 1 is delimited, describes an optical disk drive having a pivotable arm configured to position an optical drive head over a selected portion of an optical disk. The disk drive has a light source mounted to the arm configured to generate a beam of light. A reflector of the disk drive is configured to receive the beam of light and direct the beam to a selected portion of the optical drive head.

It is an aim of the present invention to provide a swing arm driving type optical recording/reproducing apparatus in which the optical loss is reduced and preferably in which the number of optical parts is reduced.

According to the first aspect of the present invention there is provided a swing arm mechanism for an optical recording/reproducing apparatus, comprising: a plurality of optical pickups each for use with an information recording surface of an optical disk, each optical pickup including a light source, an optical path changing unit, an objective lens and a photodetector; a swing member having a mount for receiving the light source, the optical path changing unit and the photodetector of each of the plurality of optical pickups, and at least first and second swing arms extending from the mount each swing arm having a suspension member for elastically biasing a slider toward a respective information recording surface of an optical disk, the slider for carrying the objective lens of a respective one of the plurality of optical pickups; a supporting unit for supporting the swing member so as to be reciprocally rotatable centering around one pivot point; and a driver for reciprocally rotating the swing member with respect to the supporting unit; characterised in that the optical pickups are located so as to be symmentrical with respect to a rotation center of the mount and a longitudinal center line of the first and second swing arms.

Preferably, the swing arm mechanism is incorporated with a driving type optical recording/reproducing apparatus comprising: a base for rotatably receiving at least one optical disk, both sides of which are information recording surfaces; wherein plurality of optical pickups is equal in number to the information recording surfaces, each optical pickup including a light source for irradiating light, an optical path changing means arranged to lie in an optical path between the light source and a respective information recording surface for changing the travelling path of light, an objective lens arranged between the optical path changing means and the respective information recording surface for condensing incident light on the information recording surface, and a photodetector for receiving the light reflected from the information recording surface and via the objective lens and the optical path changing means; the mount having installed thereon the light source, the optical path changing means, and the photodetector, the at least first and second swing arms extending from the mount; wherein the suspension member comprises an arm one end of which is coupled to a surface of a respective one of the swing arms which faces one of the information recording surfaces, and the slider which is installed at the other end of the suspension arm, so as to contact the information recording surface by the elastic bias of the suspension arm, and into which the objective lens is loaded; wherein the supporting unit is interposed between the base and the mount for supporting the swing member to be reciprocally rotatable centering around one pivot point on the base; and wherein the driving means for reciprocally rotating the swing member is a magnetic driving means.

Preferably, the supporting means comprises: a supporting protrusion formed on the base; a pivot bearing located around the outer circumference of the supporting protrusion and having an inner wheel and an outer wheel freely rotatable with respect to the inner wheel; and a supporting body carried by the outer wheel of the pivot bearing and to which the mount of the swing member is secured.

Preferably, the magnetic driving means comprises: a coil member located on the swing member and/or the supporting means; yoke members carried on the base and located at outer upper and lower portions of the coil; and magnets located on the yokes so as to face the coil, wherein the swing member is rotated by the intensity and direction of current applied to the coil member and a mutual electromagnetic force with the magnets.

For a better understanding of the invention, and to show how embodiments of the same may be carried into effect, reference will now be made, by way of example, to the accompanying diagrammatic drawings, in which:
Figure 1 is a vertical sectional view showing a swing arm driving type optical recording/reproducing apparatus according to a first embodiment of the present invention;
Figure 2 is a plan view showing part of the swing arm driving type optical recording/reproducing apparatus according the first embodiment of the present invention;
Figure 3 is a perspective view showing the optical arrangement of an optical pickup of the swing arm driving type optical recording/reproducing apparatus according to the first embodiment of the present invention;
Figure 4 is a sectional view showing part of a swing arm driving type optical recording/reproducing apparatus according to a second embodiment of the present invention; and
Figure 5 is a sectional view showing part of a swing arm driving type optical recording/reproducing apparatus according to a third embodiment of the present invention.

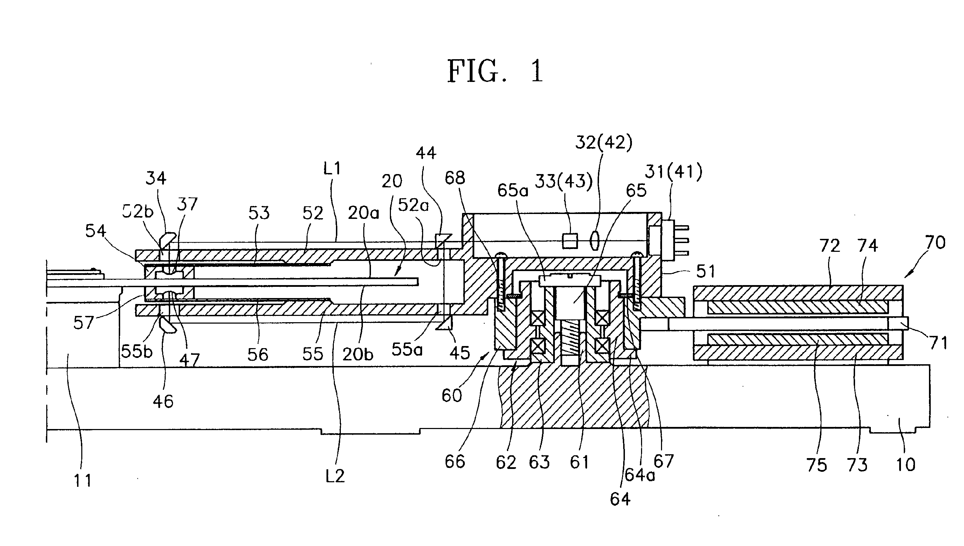

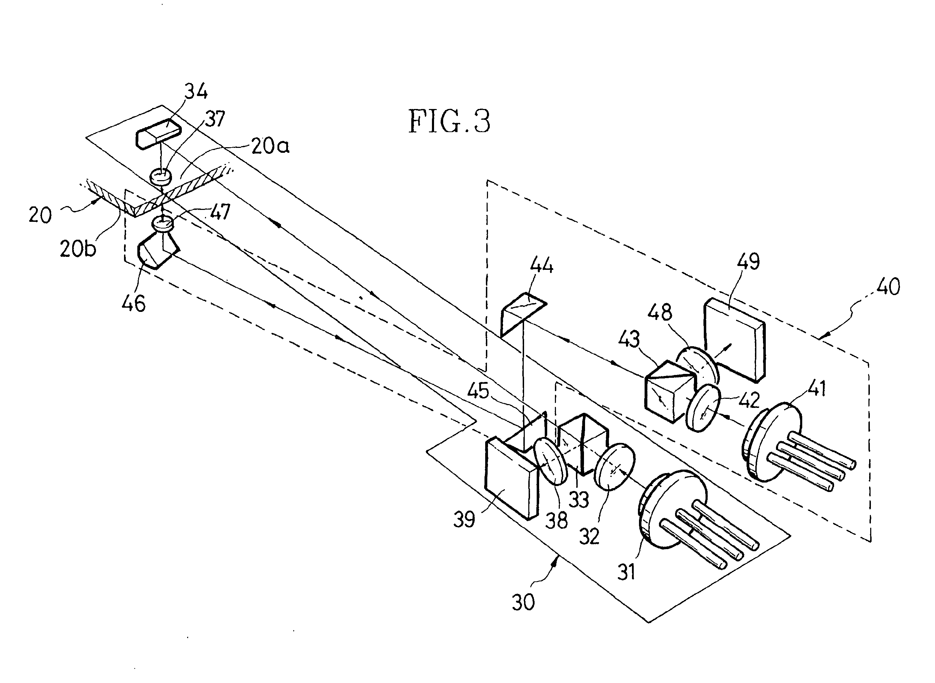

Referring to Figures 1 through 3, an optical recording/reproducing apparatus according to a first embodiment of the present invention includes a base 10, an optical disk 20 rotatably received on the base 10 and having information recording surfaces 20a and 20b at either side thereof, optical pickups for recording information on and reproducing information by irradiating light onto the information recording surfaces 20a and 20b, a swing member 50 on which the optical pickups are mounted, a supporting unit 60 for supporting the swing member 50 to be reciprocally rotatable, and a magnetic driver 70 for driving the swing member 50.

The optical disk 20 is mounted onto a spindle motor 11 installed in the base 10, and rotates on the base 10.

The optical pickup includes first and second optical pickups 30 and 40 for recording information on and reproducing information from the information recording surfaces 20a and 20b, respectively.

The first optical pickup 30 includes a first light source 31 for irradiating first light L1, a first optical path changing unit 33 arranged on an optical path between the first light source 31 and the optical disk 20, for changing the travelling path of an incident light, a first objective lens 37 for condensing the first light L1 to form a light spot on the information recording surface 20a, and a first photodetector 39 for receiving the first light L1 incident via the first objective lens 37 and the first optical path changing unit 33 after reflection by the information recording surface 20a. The first optical path changing unit 33 directs the first light L1 incident from the first light source 31 toward the first objective lens 37, and directs the first light L1 incident from the first objective lens 37 toward the first photodetector 39.

Preferably, the first optical pickup 30 further includes a first collimating lens 32 arranged on the optical path between the first light source 31 and the first optical path changing unit 33, for condensing and collimating a divergent light irradiated from the first light source 31 and a first condensing lens 38 arranged on an optical path between the first optical path changing unit 33 and the first photodetector 39, for condensing the incident light. Also, the first optical pickup 30 includes a first reflective mirror 34 arranged on an optical path between the first optical path changing means 33 and the first objective lens 37, for changing the travelling path of the first light L1 so as to be vertically irradiated onto the information recording surface 20a.

The second optical pickup 40 includes a second light source 41 for generating a second light beam L2, a second optical path changing unit 43 arranged on an optical path between the second light source 41 and the optical disk 20, for changing the travelling path of the incident light, a second objective lens 47 for condensing the second light L2 so as to form a light spot on the information recording surface 20b of the optical disk 20, and a second photodetector 49 for receiving the second light L2 incident via the second objective lens 47 and the second optical path changing unit 43 after being reflected by the information recording surface 20b.

Preferably, the second optical pickup 40 further includes a second collimating lens 42 arranged on the optical path between the second light source 41 and the second optical path changing unit 43, for condensing and collimating the divergent light irradiated from the second light source 41 and a second condensing lens 48 arranged on an optical path between the second optical path changing unit 43 and the second photodetector 49, for condensing the incident light.

Here, the first and second light sources 31 and 41, the first and second optical path changing units 33 and 43, and the first and second photodetectors 39 and 49 are installed on the same plane. The first and second objective lenses 37 and 47 are arranged over the information recording surfaces 20a and 20b, respectively. Considering the above, second, third and fourth reflective mirrors 44, 45 and 46 are arranged on an optical path between the second optical path changing unit 43 and the second objective lens 47, so as to change the travelling path of the second light L2 to be irradiated at a right angle onto the information recording surface 20b.

In this embodiment of the present invention, a cubic type beam splitter is used as the first and second optical path changing units 33 and 43. However, a sheet type beam splitter, a polarized beam splitter, and a holographic optical element (HOE) can be used as the first and second optical path changing units 33 and 43. Particularly, when the HOE is used, each of the first light source 31 and the first photodetector 39, and the second light source 41 and the second photodetector 49, can be integrated into one module.

The swinging member 50 includes a mount 51 coupled to the supporting unit 60 and a pair of first and second swing arms 52 and 55 extending from the mount 51 and protrusively formed to be placed one on either side of the optical disk 20.

The mount 51 is locked to the supporting unit 60. Most optical elements of the first and second optical pickups 30 and 40 are installed on the mount 51. For example, the light sources 31 and 41, the collimating lenses 32 and 42, the optical path changing units 33 and 43, the condensing lenses 38 and 48, and the photodetectors 39 and 49 are located on the mount 51.

In order to minimize the load on the mount 51, caused by the arrangement of the optical pickups 30 and 40, and the deterioration of resonance characteristics, caused by rotation inertia, the optical pickups 30 and 40 are located so as to be symmetrical with respect to the rotation center of the mount 51 and a longitudinal center line C of the first and second swing arms 52 and 55.

The first and second swing arms 52 and 55 are formed to be extended from the mount 51 to face the information recording surfaces 20a and 20b, respectively. The first through fourth reflective mirrors 34, 44, 45 and 46 are installed in the first and second swing arms 52 and 55. The first and second swing arms 52 and 55 have light transmission holes 52a, 52b, 55a and 55b through which the first and second light beam L1 and L2, whose paths are changed by the first through fourth reflective mirrors 34, 44, 45 and 46, pass. Also, first and second suspension arms 53 and 56 for carrying the first and second objective lenses 37 and 47 and first and second sliders 54 and 57 are coupled to the first and second swing arms 51 and 55.

The first suspension arm 53, which is suitably a plate spring having a predetermined elastic force, is coupled with one side of the first swing arm 52. The first slider 54 located at the end of the first suspension arm 53 contacts the information recording surface 20a due to an elastic force of the first suspension arm 53. Also, the first objective lens 37 separated a predetermined distance from the information recording surface 20a is loaded into the first slider 54. That is, since the first slider 54 contacts the information recording surface 20a due to the first suspension arm 53, the objective lens 37 is separated a uniform distance from the information recording surface 20a.

The second suspension arm 56 is coupled to one surface of the second swing arm 55, i.e., the surface which faces the information recording surface 20b. The second slider 57 is installed at the end of the second suspension arm 56. The second slider 57 contacts the information recording surface 20b due to the second suspension arm 56. The second objective lens 47 is installed in the second slider 57.

The supporting unit 60 interposed between the base 10 and the mount 51 supports the swing member 50 to be reciprocally rotatable centering around one hinge point (pivot point) on the base 10. For this, the supporting unit 60 includes a supporting protrusion 61 formed in the base 10 and having a screw thread inside, a pivot bearing 62 located at the supporting protrusion 61, and a supporting body 66 coupled to an outer wheel 64 of the pivot bearing 62, to which the mount 51 and a coil member 71 of the following magnetic driving unit 70 is secured.

The pivot bearing 62 has an inner wheel 63 and an outer wheel 64. The inside of the inner wheel 63 lies adjacent with the outer circumference of the support protrusion 61. A flange 64a is formed at a lower portion of the outer wheel 64 to control the downward movement of the supporting body 66. The pivot bearing 62 is installed at the outer circumference of the support protrusion 61 by locking a pivot screw 65 having a flange 65a on the top for controlling the upward movement of the inner wheel 63 with respect to the supporting protrusion 61. The supporting body 66 is located around the outer circumference of the outer wheel 64. The downward movement of the supporting body 66 is controlled by the flange 64a. The upward movement of the supporting body 66 is controlled by a retainer ring 67 coupled with the upper end of the outer wheel 64. Suitably, the retainer ring 67 fits into an annular recess around the outer wheel 64.

The swing member 50 is coupled with the supporting body 66 by a locking unit 68 such as a screw.

The driving unit 70 is located between the supporting unit 60 and the base 10, and provides the swing member 50 with a reciprocal rotation driving force. The driving unit 70 suitably includes the coil member 71 coupled to the supporting unit 60 to reciprocally rotate together with the swing member 50, yoke members 72 and 73 coupled to the base 10 and located at the outer upper and lower portions of the coil member 71, and magnets 74 and 75 installed in the yoke members 71 and 73 so as to face the coil member 71. Thus, the magnetic driving unit 70 rotates the swing member 50 by a mutual electromagnetic force with the magnets 74 and 75, changed by controlling the intensity and direction of current applied to the coil member 71.

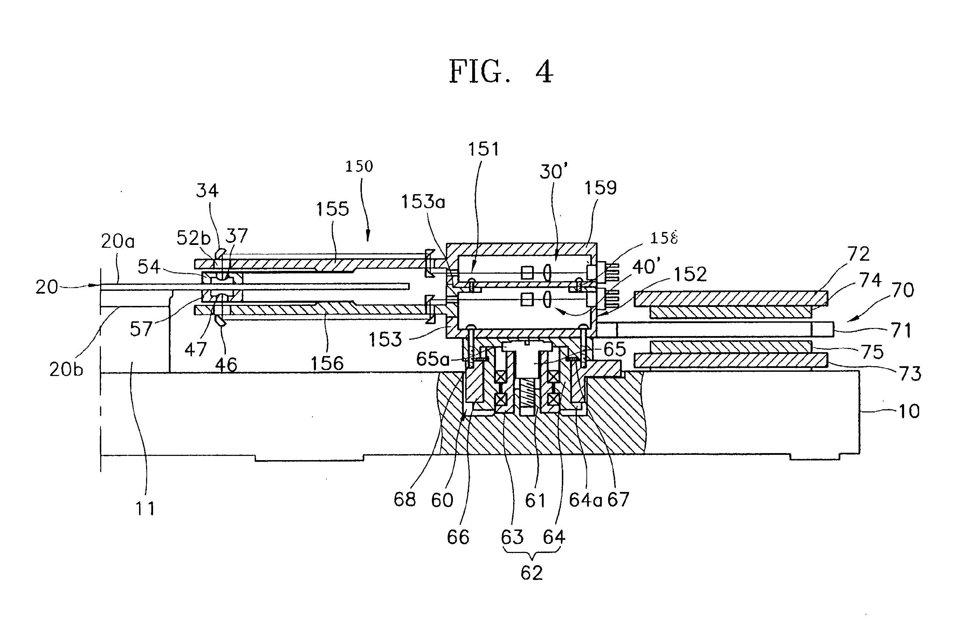

Referring to Figure 4, an optical recording/reproducing apparatus according to a second embodiment of the present invention will now be described. Like the optical recording/reproducing apparatus according to the first embodiment, the second embodiment includes a base 10, an optical disk 20 which is rotatably received on the base 10 and has information recording surfaces 20a and 20b at both sides thereof, optical pickups 30' and 40' for recording and reproducing information by irradiating light onto the information recording surfaces 20a and 20b, a swing member 150 into which the optical pickups 30' and 40' are mounted, a supporting unit 60 for supporting the swing member 150 to be reciprocally rotatable, and a magnetic driving unit 70 for driving the swing member 150. The structure of the swing member 150 and the optical arrangement of the optical pickups 30' and 40' of the optical recording/reproducing apparatus of the second embodiment are different from the optical recording/reproducing apparatus of the first embodiment.

Here, since elements having the same reference numerals as those of the first embodiment have similar or the same functions as those of the first embodiment, detailed explanation thereof will be omitted.

The swing member 150 includes first and second mounts 151 and 152 and first and second swing arms 155 and 156. The second mount 152 is coupled to the support 60. The second swing arm 156 extends from the second mount 152 and is formed to be protrusive so as to be located on a first of the information recording surfaces 20b of the optical disk 20. The first mount 151 is coupled to the second mount 152. The first swing arm 155 extends from the first mount 151 and is formed to be protrusive so as to be located on a second of the information recording surfaces 20a. Some elements of first and second optical pickups 30' and 40' are installed in the first and second mounts 151 and 152, respectively. The second mount 152 includes a spacer 153 which encloses most elements of the second optical pickup 40' and which has a step 153a in the upper portion thereof so as to easily install the first mount 151 on the second mount 152, with the installation space of the second optical pickup 40' secured. One side of the bottom of the first mount 151 is put on the step 153a of the spacer 153 and is locked to the second mount 152 by a general locking unit 158. The first mount 151 is surrounded by a cover 159 so as to protect the first optical pickup 30' installed therein.

The optical recording/reproducing apparatus having the above structure can be applied to two or more optical disks 20, which are arranged on the same axis and separated from each other by a predetermined interval. The optical recording/reproducing apparatus can be easily installed by including the swing members 50 illustrated with reference to Figure 4 which are equal in number to the optical disks 20, sequentially stacking the swing members 50 in a vertical direction, and then locking the swing members 50 to each other.

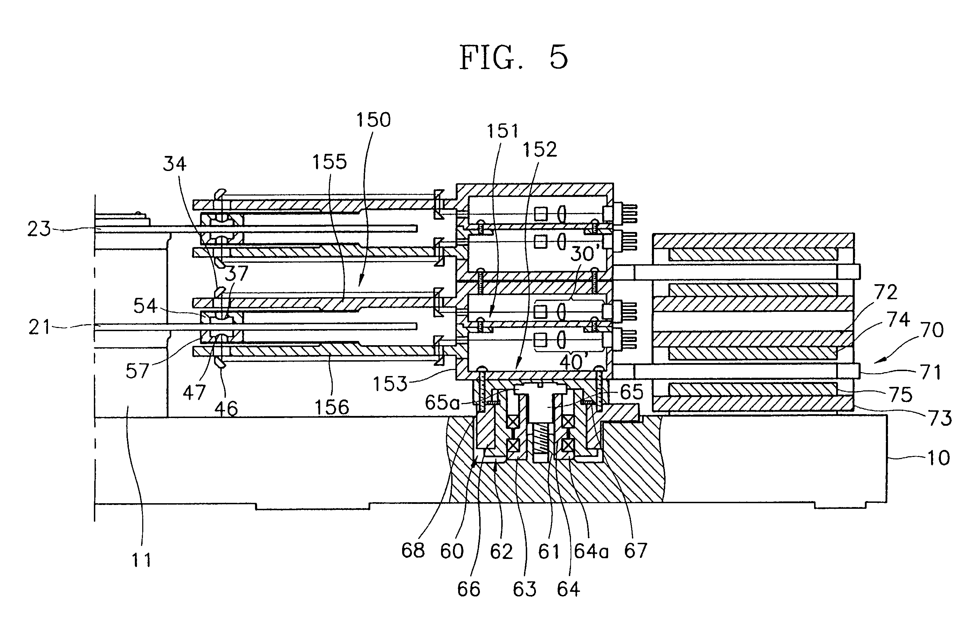

Figure 5 shows an example of the case where two optical disks 21 and 23 are adopted. As shown in Figure 5, the optical recording/reproducing apparatus can be easily installed by including two swing arms 150 each including first and second mounts 151 and 152 and first and second swing arms 155 and 156, arranging the swing members 150 to be located on the information recording surfaces of the optical disks 21 and 23, and then locking the swing members 150 to each other.

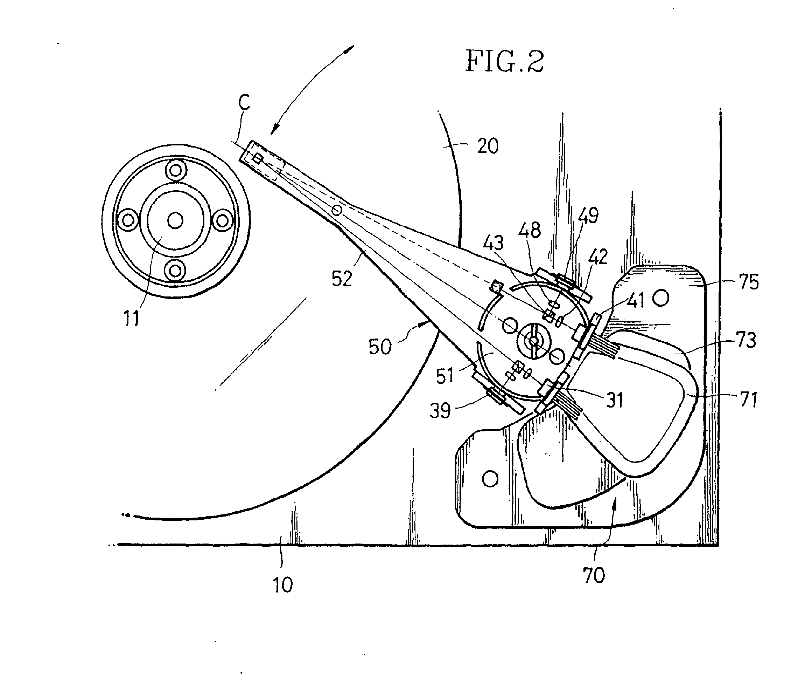

Here, in order to increase the magnetic driving force by the magnetic driving unit 70, the magnetic driving units illustrated with reference to Figures 2 through 4 can be paired.

The optical recording/reproducing apparatus according to the preferred embodiments of the present invention provides the following effects.

First, it is possible to minimize deterioration of resonance characteristics by rotation inertia by symmetrically arranging the optical elements on the swing member centering around the rotating center.

Second, it is possible to reduce access and tracking times required for changing the information recording surfaces compared with the plural optical disk recording/reproducing method using one light source and light receiving device by including the optical pickups having light sources corresponding to the respective information recording surfaces.

Third, the plural optical disks can be simultaneously formatted.

Fourth, it is possible to prevent a delay in the access time caused by an increase in the load applied to the supporting unit since the driving force of the magnetic driving unit can be easily increased when a plurality of optical disks are stacked.

Fifth, since the optical pickup is installed in the swing member, and the optical path hardly changes during tracking, the optical axis tilts slightly, whereas in a separation type, some optical systems are fixed to the base.

## Claims

1. A swing arm mechanism for an optical recording/reproducing apparatus, comprising:
a plurality of optical pickups (30,40) each for use with an information recording surface of an optical disk, each optical pickup (30,40) including a light source (31,41), an optical path changing unit (33,43), an objective lens (37,47) and a photodetector (39,49);
a swing member (50) having a mount (51) or mounts (151,152) for receiving the light source (31,41), the optical path changing unit (33,43) and the photodetector (39,49) of each of the plurality of optical pickups (30,40), and at least first and second swing arms (52,55) extending from the mount (51) or mounts (151,152) each swing arm (52,55) having a suspension member (53,56) for elastically biasing a slider (54,57) toward a respective information recording surface of an optical disk, the slider (54,57) for carrying the objective lens (37,47) of a respective one of the plurality of optical pickups (30,40);
a supporting unit (60) for supporting the swing member (50) so as to be reciprocally rotatable centering around one pivot point; and
a driver (70) for reciprocally rotating the swing member (50) with respect to the supporting unit (60); **characterised in that** the optical pickups (30, 40) are located so as to be symmetrical with respect to the rotation center of the mount (51) or mounts (151,152) and the longitudinal center line (C) of the first and second swing arms (52) and (55).

2. The swing arm mechanism of claim 1, incorporated with a driving type optical recording/reproducing apparatus, comprising:
a base (10) for rotatably receiving at least one optical disk (20), both sides of which (20a,20b) are information recording surfaces;
wherein the plurality of optical pickups (30,40) is equal in number to the information recording surfaces, each optical pickup includes a light source (31,41) for irradiating light, an optical path changing means (33,43) arranged to lie in an optical path between the light source (31,41) and a respective information recording surface (20a,20b) for changing the travelling path of light, an objective lens (37,47) arranged between the optical path changing means (33,43) and the respective information recording surface (20a,20b) for condensing incident light on the information recording surface, and a photodetector (39,49) for receiving the light reflected from the information recording surface and via the objective lens (37,47) and the optical path changing means (33,43);
the mount (51) or mounts (151,152) having installed thereon the light source, the optical path changing means (33,43), and the photodetector, the at least first and second swing arms (52,55) extending from the mount (51) or mounts (151,152)
wherein the suspension member comprises an arm (53,56) one end of which is coupled to a surface of a respective one of the swing arms (52,55) which faces one of the information recording surfaces (20a,20b), and the slider (54,57) which is installed at the other end of the suspension arm (53,56), so as to contact the information recording surface (20a,20b) by the elastic bias of the suspension arm (53,56), and into which the objective lens (37,47) is loaded;
wherein the supporting unit (60) is interposed between the base and the mount or mounts for supporting the swing member (50) to be reciprocally rotatable centering around one pivot point on the base (10); and
wherein the driving means (70) for reciprocally rotating the swing member (50) is a magnetic driving means.

3. The apparatus of claim 2, wherein the supporting means (60) comprises:
a supporting protrusion (61) formed on the base (10);
a pivot bearing (62) located around the outer circumference of the supporting protrusion (61) and having an inner wheel (63) and an outer wheel (64) freely rotatable with respect to the inner wheel (63); and
a supporting body (66) carried by the outer wheel (63) of the pivot bearing (62) and to which the mount (51) of the swing member (50) is secured.

4. The apparatus of claim 2 or 3, wherein the magnetic driving means (70) comprises:
a coil member (71) located on the swing member (50) and/or the supporting means (60);
yoke members (72,73) carried on the base (10) and located at outer upper and lower portions of the coil (71); and
magnets (74,75) located on the yokes (72,73) so as to face the coil (71),
wherein the swing member (50) is rotated by the intensity and direction of current applied to the coil member (71) and a mutual electromagnetic force with the magnets (74,75).

## Patentansprüche

1. Schwenkarmeinrichtung für ein optisches Aufzeichnungs-/Wiedergabe-Gerät, die umfasst:
eine Vielzahl von optischen Aufnehmern (30, 40), die jeweils mit einer Oberfläche zur Aufzeichnung von Informationen einer optischen Disk benutzt werden, wobei jeder optische Aufnehmer (30, 40) eine Lichtquelle (31, 41), eine Einheit zum Wechseln des optischen Pfads (33, 43), eine Objektivlinse (37, 47) und einen Photodetektor (39, 49) umfasst,
ein Schwenkglied (50), das eine Halterung (51) oder Halterungen (151, 152) zum Aufnehmen der Lichtquelle (31, 41), der Einheit zum Wechseln des optischen Pfads (33, 43) und des Photodetektors (39, 49) für jeden aus der Vielzahl der optischen Aufnehmer (30, 40) besitzt, und mindestens erste und zweite Schwenkarme (52, 55), die von der Halterung (51) oder den Halterungen (151, 152) ausgehen, wobei jeder Schwenkarm (52, 55) ein Aufhängeglied (53, 56) zum elastischen Vorspannen eines Schiebers (54, 57) in Richtung einer jeweiligen Oberfläche zur Aufzeichnung von Informationen einer optischen Disk, den Schieber (54, 57) zum Aufnehmen der Objektivlinse (37, 47) des jeweiligen aus der Vielzahl von optischen Aufnehmern (30, 40) hat,
eine Trägereinheit (60) zum Stützen des Schwenkglieds (50) derart, dass es um einen Drehpunkt als Zentrum umgekehrt drehbar ist, und
einen Mitnehmer (70) zum Drehen des Schwenkglieds (50) in umgekehrter Richtung entsprechend der Trägereinheit (60),
**dadurch gekennzeichnet, dass**
die optischen Aufnehmer (30, 40) so angeordnet sind, dass sie symmetrisch in Bezug auf das Rotationszentrum der Halterung (51) oder der Halterungen (151, 152) und in Bezug auf die längs laufende Mittellinie (C) der ersten und zweiten Schwenkarme (52) und (55) sind.

2. Schwenkarmeinrichtung nach Anspruch 1, die in ein laufwerkartiges optisches Aufzeichnungs-/Wiedergabe-Gerät eingebaut ist, die umfasst:
eine Grundplatte (10) für das drehbare Aufnehmen von mindestens einer optischen Disk (20), deren beide Seiten (20a, 20b) Oberflächen zur Aufzeichnung von Informationen darstellen,
wobei die Vielzahl der optischen Aufnehmer (30, 40) gleich der Anzahl der Oberflächen zur Aufzeichnung von Informationen ist, jeder optische Aufnehmer (30, 40) eine Lichtquelle (31, 41) für strahlendes Licht, Mittel zum Wechseln des optischen Pfads (33, 43), die auf einer optischen Linie zwischen der Lichtquelle (31, 41) und einer entsprechenden Oberfläche zur Aufzeichnung von Informationen (20a, 20b) liegend zum Ändern des Laufwegs des Lichts angeordnet sind, eine Objektivlinse (37, 47), die zwischen den Mitteln zum Wechseln des optischen Pfads (33, 43) und der entsprechenden Oberfläche zur Aufzeichnung von Informationen (20a, 20b) zum Verdichten des Auflichts auf die Oberfläche zur Aufzeichnung von Informationen angeordnet ist, und einen Photodetektor (39, 49) zum Aufnehmen des Lichts, das von der Oberfläche zur Aufzeichnung von Informationen über die Objektivlinse (37, 47) und die Mittel zum Wechseln des optischen Pfads (33, 43) reflektiert wird, umfasst,
die Halterung (51) oder die Halterungen (151, 152), worauf die Lichtquelle, die Mittel zum Wechseln des optischen Pfads (33, 43), der Photodetektor und mindestens die ersten und zweiten Schwenkarme (52, 55), die von der Halterung (51) oder den Halterungen (151, 152) ausgehen, installiert sind
wobei das Aufhängeglied einen Arm (53, 56) umfasst, dessen eines Ende mit einer Oberfläche des jeweiligen Schwenkarms (52, 55), der einer der Oberflächen zur Aufzeichnung von Informationen (20a, 20b) zugewandt ist, verbunden ist, und der Schieber (54, 57), der am anderen Ende des Aufhängearms (53, 56) so angebracht ist, dass er durch die elastische Vorspannung des Aufhängearms (53, 56) Kontakt zur Oberfläche zur Aufzeichnung von Informationen (20a, 20b) hat, und in den die Objektivlinse (37, 47) zugeführt wird,
wobei die Trägereinheit (60) zwischen der Grundplatte und der Halterung oder den Halterungen zum Stützen des Schwenkglieds (50) so eingefügt wird, dass es sich um einen Drehpunkt auf der Grundplatte (10) als Mittelpunkt in umgekehrter Richtung drehen kann, und
wobei die Antriebseinrichtung (70) zum Drehen des Schwenkglieds (50) in umgekehrter Richtung als magnetische Antriebseinrichtung ausgeführt ist.

3. Gerät nach Anspruch 2, wobei die Trägereinheit (60) umfasst:
einen Stützvorsprung (61), der auf der Grundplatte (10) geformt ist,
ein Drehlager (62), das rings um den äußeren Umfang des Stützvorsprungs (61) angeordnet ist und das ein inneres Rad (63) und ein äußeres Rad (64) besitzt, das vom inneren Rad (63) unabhängig drehbar ist, und
einen Stützkörper (66), der vom äußeren Rad (63) des Drehlagers (62) gehalten wird und an dem die Halterung (51) des Schwenkglieds (50) befestigt ist.

4. Gerät nach Anspruch 2 oder 3, wobei die magnetische Antriebseinrichtung (70) umfasst:
ein Magnetspulenelement (71), das auf dem Schwenkglied (50) und/oder der Trägereinrichtung (60) angeordnet ist,
Jochelemente (72, 73), die auf der Grundplatte (10) angebracht sind und an den äußeren oberen und unteren Abschnitten der Magnetspule (71) angeordnet sind, und
Magnete (74, 75), die auf den Jochelementen (72, 73) so angeordnet sind, dass sie zur Magnetspule (71) hin zeigen,
wobei das Schwenkglied (50) durch die Stärke und Richtung des Stroms, der an das Magnetspulenelement (71) angelegt wird, und einer wechselseitigen elektromagnetischen Kraft aus den Magneten (74, 75) gedreht wird.

## Revendications

1. Mécanisme à bras oscillant pour un dispositif d'enregistrement/reproduction optique, comportant :
une pluralité de capteurs optiques (30, 40) chacun à utiliser avec une surface d'enregistrement d'informations d'un disque optique, chaque capteur optique (30, 40) incluant une source de lumière (31, 41), une unité de changement de trajet optique (33, 43), un objectif (37, 47) et un photodétecteur (39, 49),
un élément oscillant (50) ayant un support (51) ou des supports (151, 152) pour recevoir la source de lumière (31, 41), l'unité de changement de trajet optique (33, 43) et le photodétecteur (39, 49) de chaque capteur parmi la pluralité de capteurs optiques (30, 40), et au moins des premier et second bras oscillants (52, 55) s'étendant depuis le support (51) ou les supports (151, 152), chaque bras oscillant (52, 55) ayant un élément de suspension (53, 56) pour rappeler élastiquement un élément coulissant (54, 57) vers une surface d'enregistrement d'informations respective d'un disque optique, l'élément coulissant (54, 57) pour supporter l'objectif (37, 47) d'un capteur respectif parmi la pluralité de capteurs optiques (30, 40),
une unité de support (60) pour supporter l'élément oscillant (50) de manière à pouvoir tourner de manière réciproquement centrée autour d'un point de pivotement, et
un dispositif d'entraînement (70) pour mettre réciproquement en rotation l'élément oscillant (50) par rapport à l'unité de support (60), **caractérisé en ce que** les capteurs optiques (30, 40) sont localisés de manière à être symétriques par rapport au centre de rotation du support (51) ou des supports (151, 152) et la ligne centrale longitudinale (C) des premier et second bras oscillants (52) et (55).

2. Mécanisme à bras oscillant selon la revendication 1, incorporé avec un dispositif d'enregistrement/reproduction optique de type à entraînement, comportant:
une base (10) pour recevoir en rotation au moins un disque optique (20), les deux côtés de celui-ci (20a, 20b) étant des surfaces d'enregistrement d'informations,
dans lequel la pluralité de capteurs optiques (30, 40) est égale en nombre aux surfaces d'enregistrement d'informations, chaque capteur optique inclut une source de lumière (31, 41) pour irradier de la lumière, des moyens de changement de trajet optique (33, 43) agencés pour reposer dans un trajet optique entre la source de lumière (31, 41) et une surface d'enregistrement d'informations respective (20a, 20b) pour changer le trajet de déplacement de lumière, un objectif (37, 47) agencé entre les moyens de changement de trajet optique (33, 43) et la surface d'enregistrement d'informations respective (20a, 20b) pour condenser la lumière incidente sur la surface d'enregistrement d'informations, et un photodétecteur (39, 49) pour recevoir la lumière réfléchie par la surface d'enregistrement d'informations et via l'objectif (37, 47) et des moyens de changement de trajet optique (33, 43),
le support (51) ou les supports (151, 152) ayant installé sur eux la source de lumière, les moyens de changement de trajet optique (33, 43), et le photodétecteur, les au moins premier et second bras oscillants (52, 55) s'étendant depuis le support (51) ou les supports (151, 152),
dans lequel l'élément de suspension comporte un bras (53, 56) une extrémité duquel étant couplée à une surface d'un bras respectif parmi les bras oscillants (52, 55) placée en vis-à-vis d'une surface parmi les surfaces d'enregistrement d'informations (20a, 20b), et l'élément coulissant (54, 57) qui est installé à l'autre extrémité du bras de suspension (53, 56), de manière à être en contact avec la surface d'enregistrement d'informations (20a, 20b) par le rappel élastique du bras de suspension (53, 56), et dans lequel l'objectif (37, 47) est chargé,
dans lequel l'unité de support (60) est intercalée entre la base et le support ou les supports pour supporter l'élément oscillant (50) afin de pouvoir tourner de manière réciproquement centrée autour d'un point de pivotement sur la base (10), et
dans lequel les moyens d'entraînement (70) pour mettre réciproquement en rotation l'élément oscillant (50) sont des moyens d'entraînement magnétiques.

3. Dispositif selon la revendication 2, dans lequel les moyens de support (60) comportent:
une saillie de support (61) formée sur la base (10),
un palier de pivotement (62) localisé autour de la circonférence extérieure de la saillie de support (61) et ayant une roue interne (63) et une roue externe (64) pouvant tourner librement par rapport à la roue interne (63), et
un corps de support (66) porté par la roue externe (63) du palier de pivotement (62) et sur lequel le support (61) de l'élément oscillant (50) est fixé.

4. Dispositif selon la revendication 2 ou 3, dans lequel les moyens d'entraînement magnétiques (70) comportent:
un élément de bobine (71) localisé sur l'élément oscillant (50) et/ou les moyens de support (60),
des éléments formant arceau (72, 73) portés sur la base (10) et localisés au niveau des parties supérieure et inférieure extérieures de la bobine (71), et
des aimants (74, 75) localisés sur les éléments formant arceau (72, 73) de manière à faire face à la bobine (71),
dans lequel l'élément oscillant (50) est entraîné en rotation par l'intensité et la direction du courant appliqué à l'élément de bobine (71) et une force électromagnétique mutuelle avec les aimants (74, 75).
